# FASCICULE DE BREVET EUROPEEN

(11) **EP 0 428 463 B1**
(45) Date de publication et mention de la délivrance du brevet: **20.03.1996**
(21) Numéro de dépôt: 90440100.7
(22) Date de dépôt: 13.11.1990
(51) Int. Cl.: F16C 23/08

(54) **Dispositif de montage flottant d'un axe, en particulier de capteur**
Vorrichtung zur freibewegenden Anordnung einer Welle, insbesondere für einen Sensor
Floating mounting device of an axle, especially for a sensor

(30) Priorité: 14.11.1989 FR 8915079
(43) Date de publication de la demande: 22.05.1991
(73) Titulaire: HOHNER AUTOMATION, S.A., F-67200 Strasbourg (FR); A.T.R. ADVANCED TECHNOLOGY RESEARCH, S.A., F-67200 Strasbourg (FR)
(72) Inventeur: Urban, Benoit, 67240 Oberhoffen S/Moder (FR); Hubsch, Jean-Marc, 67610 La Wantzenau (FR); Stephan, Pierre, 68000 Colmar (FR)
(74) Mandataire: Nuss, Pierre

(56) Documents cités:
- FR-A- 2 623 850
- US-A- 3 365 252

## Description

La présente invention concerne le domaine du montage d'axes présentant des défauts d'alignement axiaux, radiaux ou angulaires, en particulier des axes de capteurs, et a pour objet un dispositif de montage flottant d'un axe adapté à cet effet.

Actuellement, les défauts d'alignement axiaux, radiaux ou angulaires sont compensés par la prévision d'accouplements externes aux capteurs, du type à ressorts, à soufflets, joints à cardans, joints d'Oldham ou encore du type usiné, par exemple munis de stries sur une partie de leur pourtour.

Ces dispositifs de compensation d'alignement connus présentent, cependant, l'inconvénient d'être toujours externes aux appareils dont ils équipent l'axe, notamment aux capteurs, et d'être uniquement adaptés à une utilisation sur des axes pleins, aucune possibilité d'application à des axes creux n'étant envisageables.

Par ailleurs, on connaît, par US-A-3 365 252, un arrangement selon le préambule de la revendication 1 avec un montage de palier à précontrainte permettant des défauts d'alignement. Cependant, ce document ne divulgue pas que le boîtier sert de support aux autres éléments. Le boîtier représenté dans ce document US-A-3 365 252 est uniquement destiné à former un logement rigide pour un roulement et à permettre la jonction de ce dernier à un élément élastique. L'objet de ce brevet est destiné à des paliers à précontrainte, l'élément élastique formant une paroi d'une chambre pouvant être mise sous pression.

En effet, le palier est à précharge sur une de ses extrémités et est monté dans un boîtier qui est relié, par l'intermédiaire d'un soufflet, à un carter d'extrémité pouvant être mis sous une pression différente de la pression extérieure.

Ce principe de précontrainte n'est pas applicable à la résolution du problème posé à la présente invention, à savoir permettre des défauts d'alignement importants sans nuire au fonctionnement du capteur.

La présente invention a pour but de pallier ces inconvénients.

Elle a, en effet, pour objet un arrangement comprenant : un axe, un capot, et un dispositif de montage flottant de l'axe, qui est constitué par un boîtier rigide de logement de l'axe et par un élément élastiquement déformable de montage du boîtier rigide dans le capot, caractérisé en ce que l'arrangement comprend un ensemble codeur-capteur et le boîtier rigide sert de support aux éléments constitutifs de l'ensemble codeur-capteur, à savoir aux éléments mobiles du codeur et à des circuits électriques et électroniques du capteur.

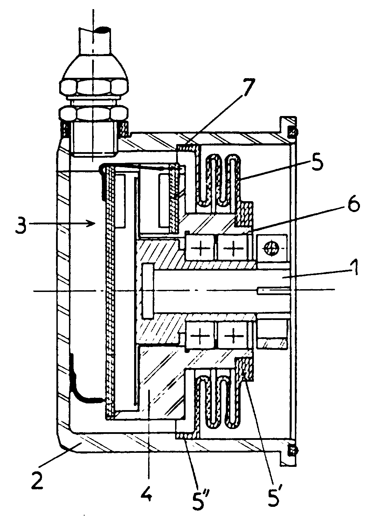

L'invention sera mieux comprise, grâce à la description ci-après, qui se rapporte à un mode de réalisation préféré, donné à titre d'exemple non limitatif, et expliqué avec référence au dessin schématique annexé, dont la figure unique est une vue en élévation latérale et en coupe d'un capteur muni d'un dispositif conforme à l'invention.

La figure du dessin annexé représente, à titre d'exemple, un arrangement comprenant : un axe 1, un capot 2, un ensemble codeur-capteur et un dispositif de montage flottant 3 de l'axe 1, qui est constitué par un boîtier rigide 4 de logement de l'axe 1 et par un élément 5 élastiquement déformable de montage du boîtier rigide 4 dans le capot 2, dans lequel le boîtier rigide 4 sert de support aux éléments constitutifs de l'ensemble codeur-capteur, à savoir aux éléments mobiles du codeur et à des circuits électriques et électroniques du capteur.

L'élément 5 élastiquement déformable est avantageusement constitué sous forme d'un soufflet en matière synthétique, de préférence en PTFE. Cet élément 5 est monté, d'une part, à une de ses extrémités, par une partie annulaire 5' de plus faible diamètre que les plis internes du soufflet, sur un palier externe 6 du boîtier rigide 4 et, d'autre part, à son autre extrémité, par une partie annulaire 5" de plus grand diamètre que les plis externes du soufflet, dans un palier interne 7 du capot 2 du codeur proprement dit.

L'utilisation d'une matière synthétique telle que le PTFE comme constituant de l'élément 5 permet d'éviter, dans certaines industries, l'effet de pile électrique pouvant se produire lors de l'utilisation d'alliages tels que le nickel-chrome, le PTFE ayant un comportement parfaitement neutre. En outre, le PTFE permet une adaptation à des mésalignements relativement importants entre le capot 2 du codeur et l'axe 1.

Comme le montre le dessin annexé, le boîtier rigide 4 sert également de support aux éléments constitutifs de l'ensemble codeur-capteur, à savoir aux éléments mobiles, ainsi qu'à des circuits électriques et électroniques. Ce mode de réalisation permet donc de monter l'ensemble des éléments d'un capteur à l'extérieur du capot, puis de réaliser l'assemblage de ces éléments avec le capot 2 par simple insertion dans ce dernier et montage au moyen de l'élément élastique 5. Il en résulte qu'il n'est plus nécessaire de disposer d'une installation spécifique de montage et de réglage de ces divers éléments avec maintien simultané du capot 2.

Grâce à l'invention, il est possible de réaliser un montage flottant d'un axe, en particulier de capteur, permettant des défauts d'alignement axiaux, radiaux et/ou angulaires importants.

En outre, le dispositif conforme à l'invention est applicable indifféremment à des axes pleins ou creux sans nécessiter de dispositif accessoire supplémentaire.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention comme défini dans les revendications suivantes.

## Revendications

1. Arrangement comprenant : un axe (1), un capot (2) et un dispositif de montage flottant (3) de l'axe (1), qui est constitué par un boîtier rigide (4) de logement de l'axe (1) et par un élément (5) élastiquement déformable de montage du boîtier rigide (4) dans le capot (2), caractérisé en ce que l'arrangement comprend un ensemble codeur-capteur et le boîtier rigide (4) sert de support aux éléments constitutifs de l'ensemble codeur-capteur, à savoir aux éléments mobiles du codeur et à des circuits électriques et électroniques du capteur.

2. Dispositif, suivant la revendication 1, caractérisé en ce que l'élément (5) élastiquement déformable est avantageusement constitué sous forme d'un soufflet en matière synthétique, de préférence en PTFE.

3. Dispositif, suivant la revendication 2, caractérisé en ce que cet élément (5) est monté, d'une part, à une de ses extrémités, par une partie annulaire (5') de plus faible diamètre que les plis internes du soufflet, sur un palier externe (6) du boîtier rigide (4) et, d'autre part, à son autre extrémité, par une partie annulaire (5") de plus grand diamètre que les plis externes du soufflet, dans un palier interne (7) du capot (2) du codeur proprement dit.

## Patentansprüche

1. Anlage mit einer Achse (1), einer Abdeckhaube (2) und einer Vorrichtung (3) zur freibeweglichen Anordnung der Achse (1), wobei die Vorrichtung aus einem steifen Gehäuse (4) zur Aufnahme der Achse (1) und einem elastisch deformierbaren Element (5) zur Anordnung des steifen Gehäuses (4) in der Abdeckhaube (2) besteht,
dadurch gekennzeichnet,
daß die Anlage eine Sensor-Codierer-Einheit umfaßt und daß das steife Gehäuse (4) als Träger für die Grundbauteile der Sensor-Codierer-Einheit dient, nämlich für die beweglichen Elemente des Codierers und für elektrische und elektronische Schaltkreise des Sensors.

2. Vorrichtung nach Anspruch 1, dadurch gekennzeichnet, daß das elastisch deformierbare Element (5) vorteilhafterweise in Form eines Faltenbalgs aus Kunststoff, vorzugsweise PTFE, ausgebildet ist.

3. Vorrichtung nach Anspruch 2, dadurch gekennzeichnet, daß das Element (5) einerseits, an einem seiner Enden, mit einem ringförmigen Teil (5'), dessen Durchmesser viel geringer ist als die inneren Falten des Faltenbalgs, auf einem äußeren Lager (6) des steifen Gehäuses (4) und andererseits, an seinem anderen Ende, mit einem ringformigen Teil (5"), dessen Durchmesser viel größer ist als die äußeren Falten des Faltenbalgs, in einem inneren Lager (7) der Abdeckhaube (2) des eigentlichen Codierers montiert ist.

## Claims

1. An arrangement comprising : a shaft (1), a cover (2), and a device for floating mounting (3) of the shaft (1), which is formed by a rigid casing (4) for housing the shaft (1) and by a resiliently deformable member (5) for mounting the rigid casing (4) in the cover (2) characterised in that the arrangement comprises a coder-sensor assembly and the rigid casing (4) serves as a support for the other constituent parts of the coder-sensor assembly, that is, for the movable components of the coder and for electrical and electronic circuits of the sensor.

2. A device according to claim 1, characterised in that the resiliently deformable member (5) is advantageously formed in the shape of a bellows of synthetic material, preferably PTFE.

3. A device according to claim 2, characterised in that the member (5) is mounted, on the one hand, at one of its ends, by an annular portion (5') of smaller diameter than the internal folds of the bellows, on an external bearing (6) of the rigid casing (4) and, on the other hand, at its other end, by an annular portion (5") of greater diameter than the external folds of the bellows, in an internal bearing (7) of the cover (2) of the coder itself.
